# EUROPEAN PATENT APPLICATION

(11) **EP 4 389 528 A1**
(43) Date of publication of application: **26.06.2024**
(21) Application number: 22215407.2
(22) Date of filing: 21.12.2022
(51) Int. Cl.: B60R 11/04, G03B 11/04, G03B 17/56, H04N 23/51

(54) **CAMERA HOLDER AND CAMERA SYSTEM FOR A MOTOR VEHICLE**

(71) Applicant: Magna Electronics Sweden AB, 447 37 Vårgårda (SE)
(72) Inventor: ROSENLUND, Erik, 583 30 Linköping (SE)
(74) Representative: Müller Verweyen

(57) **Abstract**

The invention relates to a camera holder (10) for a motor vehicle comprising a bracket (11) and a light trap (12) having a light-absorbing area (13), wherein the light trap (12) is mounted to the bracket (11). The light-absorbing area (13) of the light trap (12) has an elastic deformation when being mounted to the bracket (11) and the light trap (12) is mounted spring-loaded by said elastic deformation to the bracket (11). The invention further relates to a corresponding camera system (30) .

## Description

The invention relates to a camera holder for a motor vehicle comprising a bracket and a light trap having a light-absorbing area, wherein the light trap is mounted to the bracket according to the preamble of claim 1. Further, the invention relates to a corresponding camera system according to the preamble of claim 15.

Camera holders and camera systems for motor vehicles are used for forward looking cameras which are fastened to the wind screen of a vehicle, for example. Nonetheless, the positioning of camera holders on a vehicle is not limited to the wind screen. Herein, the cameras are often placed behind a glass and are arranged at a shallow angle with respect to the glass. In order to avoid unwanted reflections and glare, light traps are known which provide a low gloss and a light-absorbing surface. For example, he light-absorbing surface of the light trap can have a black surface and/or a grooved or rippled surface. A camera device with a light trap is known from WO 2020/234326 A1, for example.

It is the task of invention to provide an improved camera holder and camera system for a motor vehicle.

The invention solves this task with the features of the independent claims.

A camera holder for a motor vehicle comprising a bracket and a light trap having a light-absorbing area is proposed, wherein the light trap is mounted to the bracket. It is proposed that the light-absorbing area of the light trap has an elastic deformation when being mounted to the bracket and the light trap is mounted spring-loaded by said elastic deformation to the bracket.

Accordingly, the light-absorbing area of the light trap serves as a spring which allows to omit additional spring clips and enables a flatter and more simple design of the camera holder. The light trap is preferably made of plastic and is further preferably shell-shaped. Parts of the camera holder, in particular the bracket, are adapted to be attached to the wind screen or a glass of a vehicle, preferably by means of an adhesive. In a preferred mounting process, in a first step the bracket is attached to a vehicle, in particular the wind screen of the vehicle, and the light trap is attached to the bracket by flexing the light trap and the light-absorbing area of the light trap and inserting the light trap into the bracket, where it is snapped in and held by the forces of the elastic deformation of the light-absorbing area of the light trap. Said elastic deformation of the light trap is therefore not limited to a clip or an additional spring element but is spread throughout the light trap. This allows to reduce peaks of the mechanical stress in the light trap and reduces the risk of mechanical failure. As a result, in a mounted state the light trap in the camera holder has a different shape compared to an unassembled state of the light trap. The spring-loaded attachment to the bracket allows the light trap to be held to the bracket and prevents any significant displacement or deformation due to acceleration or vibration.

Preferably, the light trap comprises a designated camera position, wherein the light-absorbing area comprises a flat area which widens with increasing distance from the designated camera position, and wherein the light-absorbing area comprises two wall areas which decrease in height with increasing distance from the designated camera position.

A light trap shaped in this way is very suitable for the proposed elastic deformation when being mounted to the bracket so that the light trap is fastened due to the spring-load of the light trap itself.

Preferably, the light-absorbing area of the light trap has a projected area in the shape of a triangle, wherein further preferably the designated camera position is arranged at one of the threes corners of the said triangular shape. The height of the walls is preferably the highest next to the designated camera position and the lowest at the two other corners. Said triangular shape is adapted to follow the field of view of a camera held by the camera holder.

The light-absorbing area of the light trap is an area which is adjacent to the field-of-view of a camera held by the camera holder, where reflections could impair the image quality of the camera. This is of particular importance when the optical axis of the designated camera position and/or a camera held by the camera holder is arranged at a shallow angle with respect to the glass or wind screen of a vehicle.

In a further development, it is proposed that the light-absorbing area of the light trap being mounted to the bracket is bent along two flex lines at the transition between the flat area of the light-absorbing area and the two wall areas of the light-absorbing area.

Accordingly, the spring force due to the elastic deformation is concentrated in the light trap about these two flex lines, which can also be called wall flex lines. The elastic deformation in this deformation mode results in the largest displacement at the edges of the wall, where the light trap is preferably in contact with the bracket. Further preferably, the wall parts of the light trap close to the designated camera position are pushed to each other by the bracket in the mounted state. In general, the flexibility of the light trap increases with the height of the walls.

It is further proposed that the light-absorbing area of the light trap is bent along a symmetry flex line being mounted to the bracket. Preferably, the symmetrical flex line and an optical axis of the designated camera position or of a camera, in particular a camera held at the designated camera position in the camera holder, are in a common plane.

In this case, the bent light trap has a concentrated spring force due to the elastic deformation concentrated along the symmetry flex line. The flexibility of the light trap increases with the width of the light trap. In this mode of elastic deformation the edges of the light trap are displaced, in particular at the widest part of the light trap, where the light trap is also the most flexible with regard to this kind of bending.

In preferred embodiments, the light trap is bent along two flex lines at the transition between the flat area of the light-absorbing area and the two wall areas of the light-absorbing area and bent along the symmetry flex line in the mounted state. This allows a good distribution of the spring-loaded holding forces interacting with the bracket.

Further on, the edges of the wall areas of the light trap are elastically deflected towards the optical axis of the designated camera position or of a camera, in particular in proximity to the designated camera position. As a result, retaining forces due to the elastic deformation are exerted towards the bracket. The bracket is preferably stiffer than the light trap. The stiffness of the bracket can be further increased when the bracket is attached to a transparent member like a wind screen.

The elastic deformation along two flex lines at the transition between the flat area of the light-absorbing area and the two wall areas of the light-absorbing area enables the light trap to exert retaining forces with a force component aligned with the other side of the wall area and another force component aligned with the optical axis of a camera in the designated camera position and/or a camera held by the camera holder. Therefore, said first force components balance each other while the second force component is balanced by a retaining force at the wide side of the light trap opposite designated camera position.

In a further development, it is proposed that the light trap comprises at least one slit, in particular at least one slit in the light-absorbing area. One or more slit in the light trap can lower the stiffness of the light trap. Thereby, the retaining forces and the deflection behavior of the light trap can be designed in a favorable way.

In a preferred embodiment, the bracket and the light trap each comprise mounting points corresponding to each other in shape. Thereby, the mounting points form interface positions, where the retaining forces of the spring-loaded light trap preferably push against the bracket, and where further retaining forces in other direction than the spring-loaded forces can hold the light trap in position with respect to the bracket.

It is further proposed that each mounting point retains the light trap at least in an axis perpendicular to an attachment area of the bracket. Preferably, the bracket is adapted to be glued to a transparent member, in particular to a wind screen, with the attachment area. Accordingly, the light trap can be snapped into the bracket, for example.

Preferably, the light trap comprises wedged pins and/or wedged sections as mounting points and the bracket comprises corresponding sockets as mounting points. Thereby, it is enabled to easily attach the light trap to the bracket and the retain the light trap, wherein the wedged pins and/or wedged sections allow a centering of the light trap in the bracket in a designated position. The centering of the light trap is preferably in a plane parallel to the attachment area. Preferably, the alignment of the edges of the wedged pins and/or wedged sections is parallel to an attachment area of the bracket. Further preferably, the sockets have a separate contact surface for each direction perpendicular to an attachment area of the bracket to allow for a split line of a molding tool for the bracket. In a preferred embodiment, the sockets and/or the mounting points comprise a clearance in a plane parallel to the attachment area of the bracket to avoid an undesired tilting of the light trap in the bracket.

In a further development, it is proposed that the mounting points are arranged at positions symmetrical to an optical axis of the designated camera position and/or a camera. This enables a favorable distribution of the spring forces by the elastic deformation of the light trap.

Preferably, the bracket comprises at least one sliding ramp next to at least one mounting point. This facilitates the attachment of the light trap to the bracket. Here, the light trap can be pushed against the brackets, wherein the sliding ramp translates this push into an elastic deformation and deflection of the light trap perpendicular to the push and mounting direction.

It is further proposed that the light trap has at least one protrusion that is adapted to enable the detachment of the light trap from the bracket. The protrusion may be formed as a small wedge, for example. With the protrusion, it is easy to apply a release force against the spring force of the light trap in the bracket and further increase the elastic deformation so that the light trap can be released from the bracket. This makes maintenance or replacement very simple.

In preferred embodiment, the light trap is adapted to have a camera directly attached to the light trap. Thereby, a camera can be attached to the camera holder together, with the light trap, i.e., in the same process step, which facilitates the manufacturing process.

In another preferred embodiment, the bracket is adapted to have a camera directly attached to the bracket. This may enable a stiffer connection to the bracket and thus to a vehicle.

In order to further solve the task of the invention, a camera system is proposed comprising a camera holder according to any one of claims 1 to 14, wherein a camera is fastened to the camera holder, in particular at the designated camera position of the light trap. This results in a light-weight and small camera system for a motor vehicle.

In the following the invention shall be illustrated on the basis of preferred embodiments with reference to the accompanying drawings, therein shows:
- Fig. 1: a camera holder with a light trap in a perspective view;
- Fig. 2: the backside of a camera holder in a perspective view;
- Fig. 3: a camera holder from the frontside;
- Fig. 4: a cross-sectional view of a camera holder;
- Fig. 5: a camera holder with slits from the frontside
- Fig. 6: a camera system with a camera holder from the frontside;
- Fig. 7: a detail view of a mounting point of a light trap;
- Fig. 8: a detail view of a mounting point of a bracket;
- Fig. 9: a cross-sectional view of an interface between a light trap and a bracket;
- Fig. 10: an interface between a light trap and a bracket;
- Fig. 11: a bracket with a sliding ramp;
- Fig. 12: a light trap with a protrusion;
- Fig. 13: a light trap bent along the symmetry flex line;
- Fig. 14: a light trap bent along the two wall flex lines;
- Fig. 15 to 18: different shapes of mounting points;
- Fig. 19 and 20: further shapes of mounting points;
- Fig. 21: a light trap; and
- Fig. 22: a bracket.

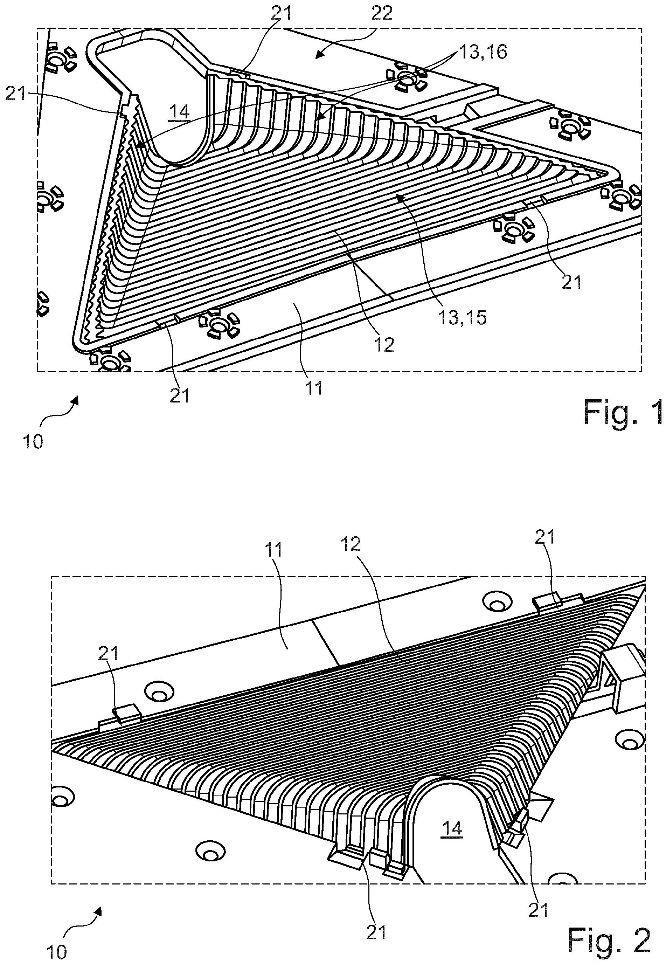

In Figure 1 an advantageous embodiment of a camera holder 10 is shown from the top side. The camera holder 10 comprises a bracket 11 with an attachment area 22. The bracket 11 is adapted to be attached to the inner side of a wind screen of a vehicle by means of an adhesive applied to the attachment area 22. A light trap 12 is attached in a cut-out of the bracket 11 which has the function to reduce reflections and glare in the direction of a camera 31 held by the camera holder 10 at a designated camera position 14. In order to reduce reflections along the field-of-view of a camera 31 at the designated camera position 14 the light trap has a light-absorbing area 13 that is black or dark in general and has additional ripples to further reduce reflections in this embodiment.

The light trap 12 has basically a triangular shape, wherein the designated camera position 14 is arranged at one corner of said triangular shape. Further, the light trap 12 has a shell-like structure and the light-absorbing area 13 has curved shape which consists of a relative flat area 15 and two adjacent wall areas 16. The wall areas 16 are the highest next the designated camera position 14 which is adapted to receive and hold a camera 31 in the camera holder 10. The height of the wall areas 16 of the light-absorbing area 13 decline to the side of the triangular shape opposite the designated camera position 14.

The light trap 12 and the bracket 11 have four interfaces at four mounting points 21 in this embodiment. Nonetheless, embodiments with more or less interfaces are also possible. The light trap 12 has two mounting points 21 on the edges of the wall areas 16 next to the designated camera position 14 and two mounting points 21 on the shallow side of the light trap 12. The light trap 12 is attached with its mounting points 21 to corresponding mounting points 21 of the bracket 11. In order to provide a proper fixation of the light trap 12 to the bracket 11, the light trap 12 is flexed so that the light trap 12 is elastically deformed when attached to the bracket 11. An elastic deformation of the light trap 12 in the light-absorbing area 13 results in a spring force which pushes against the bracket 11 at the mounting points 21. Thereby, the light trap 12 is secured to bracket 11.

Figure 2 shows a perspective view of the camera holder 10 from the bottom side and from the opposite direction so that the designated camera position 14 of the camera holder 10 is in the foreground. The two mounting points 21 next to the designated camera position 14 are also shown, wherein the wall-like parts of the light trap 12 respectively the wall areas 16 of the light-absorbing area 13, which is obscured in the view of Figure 2, are elastically bent towards each other and towards the center line of the light trap 12. Hence, the light trap 12 is spring-loaded and thereby attached to the bracket 11.

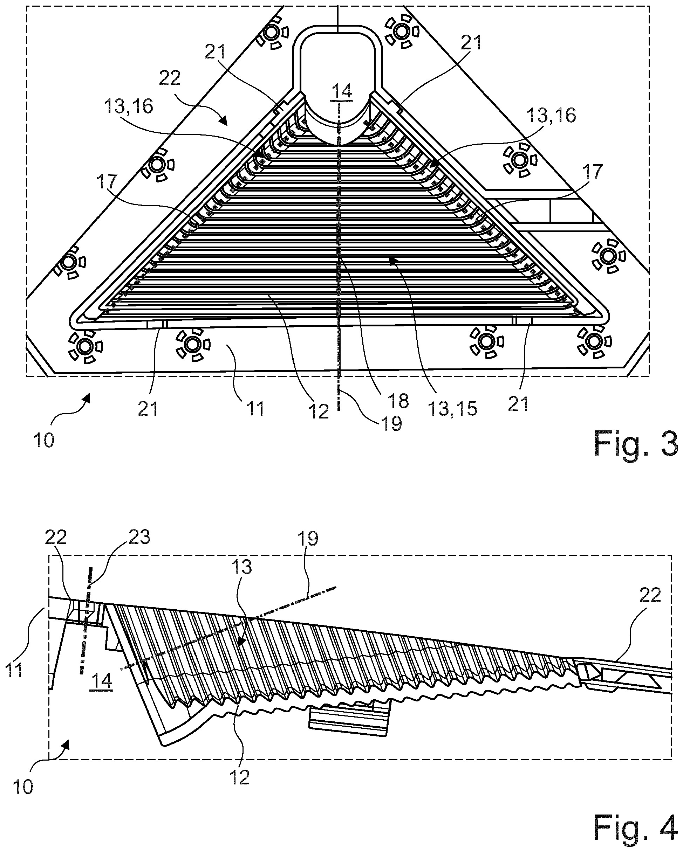

In Figure 3 the camera holder 10 from the frontside is shown, which is directed to a windscreen of a vehicle in a typical use case. Here, the triangular shape of the light trap 12 can be seen. Further on, the light trap 12 is symmetrical along an axis which is the optical axis 19 of the designated camera position 14 or of a camera 31 at the designated camera position 14.

In this embodiment, the light trap 12 is bent or elastically deformed in two ways in the mounted state shown. The light trap 12 and the light-absorbing area 13 of the light trap 12 are bent along a symmetry flex line 18. Accordingly, the symmetry flex line 18 is lower with respect to the attachment area 22 in the mounted and elastically deformed state than in the unmounted state. The two wall-areas 16 are bent upwards with respect to the attachment area 22 along two flex lines 17 which are located at the transitions of the wall areas 16 to the flat area 15 of the light-absorbing area 13.

Figure 4 shows a cross-section of the camera holder 10, wherein the optical axis 19 of the designated camera position 14 or of mounted camera 31 can be seen from a different perspective. The spring-loaded light trap 12 preferably presses in a plane parallel to the attachment area 22 against the bracket 11, while the light trap 12 is retained by the geometric form of the corresponding mounting positions 21 in an axis 23 perpendicular to the attachment area 22 of the bracket 11. Further, Figure 4 shows the shell-like structure of the light trap 12 that allows to omit additional fasteners or spring elements in the camera holder 10.

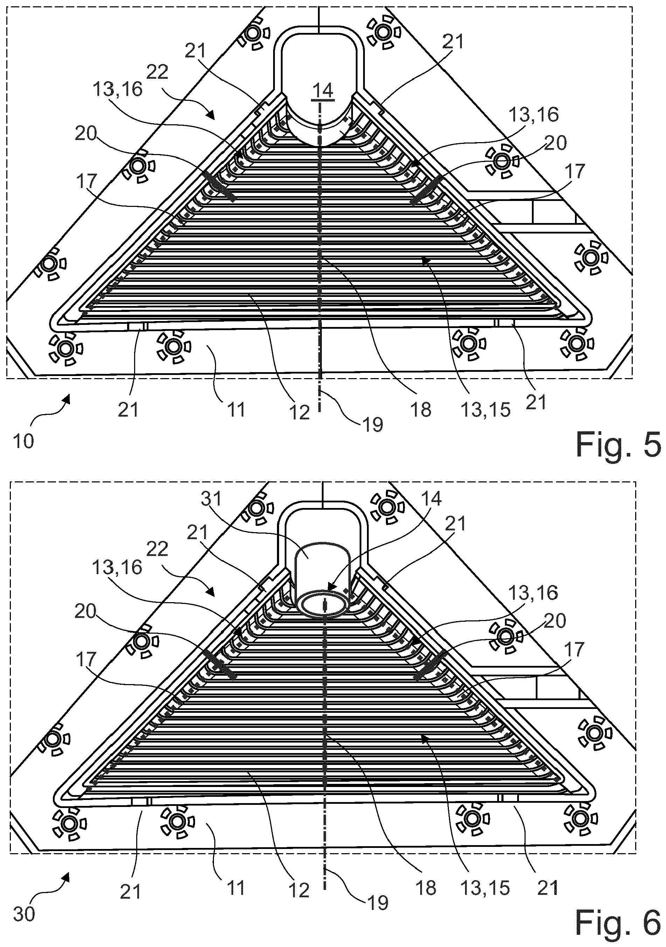

Figure 5 shows a different embodiment of the camera holder 10, wherein the light trap 12 comprises two slits 20 in the wall areas 16. These slits 20 reduce the stiffness of light trap 12 especially regarding the mounting points 21 next the designated camera position 14. Thereby, the mounting and holding forces of the light trap 12 can be designed to a specific characteristic.

In Figure 6 a camera system 30 is shown, wherein a camera 31 is held by the camera holder 10. The light trap 12 may have slits 20 as shown in Figure 6 or the light trap 12 may have no slits 20. The camera 31 is fastened to the bracket 11 in this embodiment. In alternative embodiments, the camera 31 can fastened to the light trap 12. The camera 31 is held at the designated camera position 14 of the camera holder 10. The optical axis 19 of the camera 31 and of the designated camera position 14 are identical in this preferred embodiment.

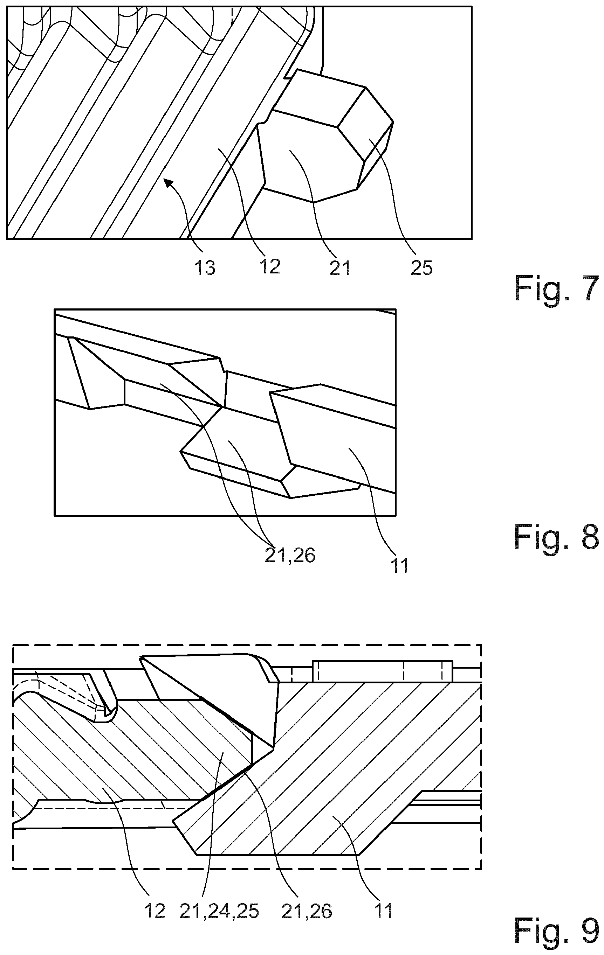

Figures 7 to 10 show details of the mounting points 21 of the camera holder 10. In Figure 7 a mounting point 21 of the light trap 12 is shown, wherein the light trap 12 has a wedged section 25 protruding from the light-absorbing area 13. A socket 26 of the bracket 11 corresponding to the wedged section 25 is shown in Figure 8. As shown in Figure 8 the retaining surfaces of the socket 26 at the mounting point 21 are separated so that the bracket 11 can be molded with less-complex tooling.

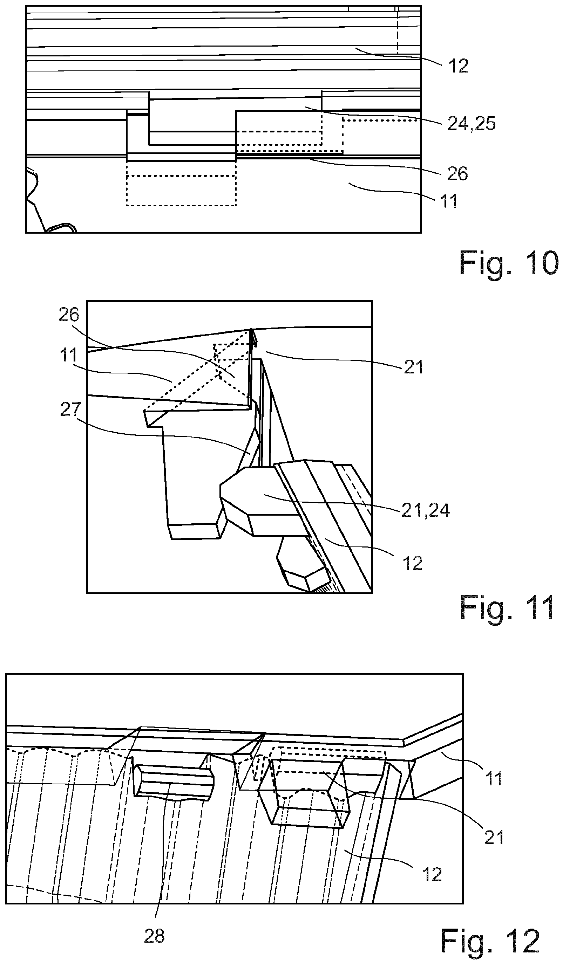

Figure 9 shows the interface of the mounting points 21 in a cross-sectional view, wherein the wedged section 25 has a form fit with the socket 26. The form fit also centers the light trap 12 in a designated plane. This also applies for wedged pins 24. In other embodiments of the camera holder 10, different shapes of the mounting points 21 are possible. The interface is also shown in Figure 10 in a different perspective. Here it is shown that the socket 26 of the bracket 11 has clearance to both sides, so there is sufficient tolerance to prevent the introduction of lateral forces.

Figure 11 shows a camera holder 10 with a bracket 11 that comprises sliding ramps 27 next the mounting points 21 or sockets 26. This allows to attach the light trap 12 to the bracket 11 by pushing the light trap 12 along the axis 23 onto the bracket 11. The light trap 12 deforms as result and snaps into the mounting positions 21 or sockets 26 of the bracket 11.

In Figure 12 shows a protrusion 28 of the light trap 12 which is arranged in a corresponding cut-out of the bracket 11. The protrusion 28 is arranged close to a mounting point 21 of the light trap 12, wherein the protrusion 28 can be used to elastically deform the light trap 12 and in particular the light-absorbing area 13 of the light trap 12 in order to detach the light trap 12. The protrusion 28 may be pushed by hand, for example, to release the light trap 12 against its spring-load.

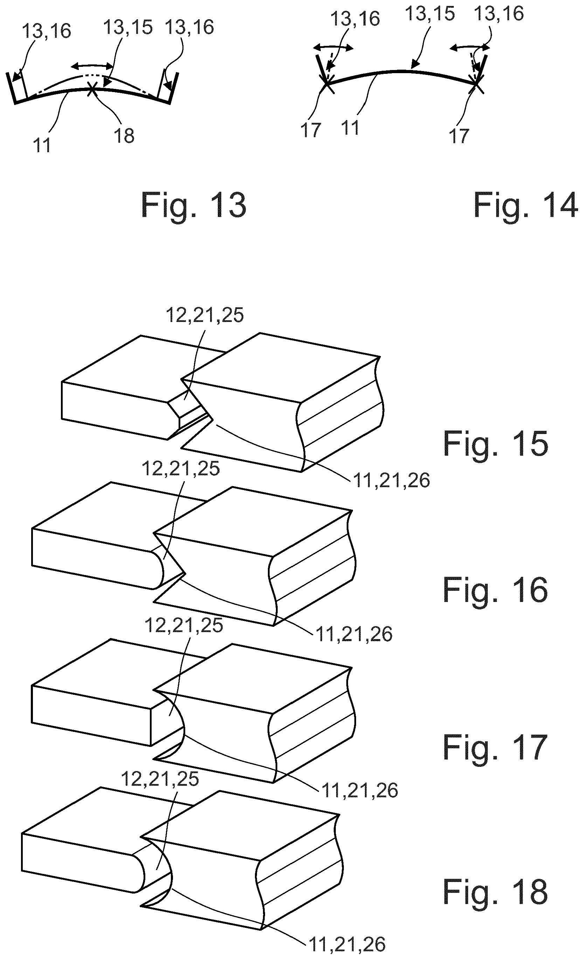

Figures 13 and 14 illustrate the elastic deformation of the light trap 12 when mounted to the bracket 11. The bending of the light-absorbing area 13 of the light trap 12 along a symmetry flex line 18 is illustrated in Figure 13, while the bending along the two flex lines 17 at the transition between the flat area 15 and the wall area 16 of the light absorbing area 13 is illustrated in Figure 14. Both bending modes are present in preferred embodiments.

Figure 15 to 20 illustrate different embodiments of mounting positions of the light trap 12 and the bracket 11. In general, a pin 24, section 25, or socket 26 can be arranged either on the bracket 11 or on the light trap 12, wherein Figures 15 to 20 illustrate the socket 26 arranged on the bracket 11 and the pin 24 or section 25 arranged on the light trap 12. Nonetheless, the corresponding mounting points 21 could also be arranged the other way.

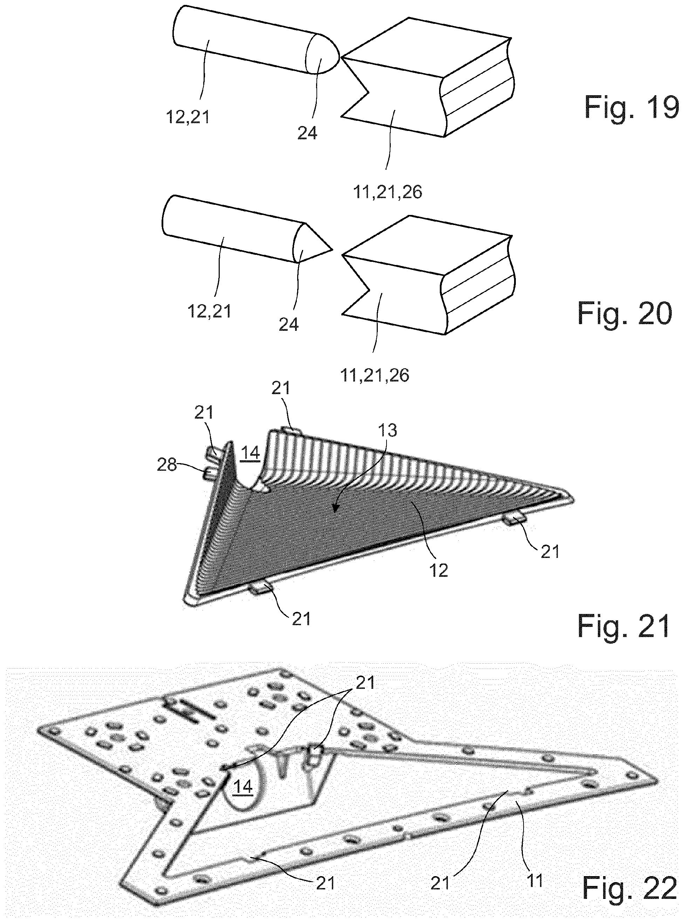

Figure 15 shows a mounting point 21 of the light trap 12 in the form of a wedged section 25, wherein the corresponding mounting point 21 of the bracket 11 comprises a socket 26 in V-shape. In the embodiment of the mounting point 21 of the light trap 12 the section 25 is rounded and the socket 26 of the bracket 26 is V-shaped. In Figure 17 the section 25 of the light trap 12 has a rectangular shape and the socket 26 has concave shape or a shape like a half-circle. The embodiment shown in Figure 18 comprises a rounded section 25 at the mounting point 21 of the light trap 12, wherein the mounting point 21 of the corresponding socket 26 has concaved and rounded shape. Figure 19 shows a mounting point 21 of the light trap 12 in the form of a rounded tip 24, wherein the corresponding socket 26 of the bracket 11 is V-shaped. Figure 20 shows a mounting point 21 of the light trap 12, which is spiky and cone-shaped, wherein the corresponding mounting point 21 of the bracket 11 is V-shaped.

Figure 21 shows an advantageous embodiment of a light trap 12, which comprises four mounting points 21 in the form of wedged sections 25. The light trap 12 further comprises a protrusion 28 that allows to easily detach the light trap 12 from the bracket 11 of the camera holder 10. An embodiment of a corresponding bracket 11 is shown in Figure 22 that comprises four mounting points 21 corresponding to the mounting points 21 of the light trap 21.

## Claims

1. Camera holder (10) for a motor vehicle comprising a bracket (11) and a light trap (12) having a light-absorbing area (13), wherein the light trap (12) is mounted to the bracket (11), **characterized in that** the light-absorbing area (13) of the light trap (12) has an elastic deformation when being mounted to the bracket (11) and the light trap (12) is mounted spring-loaded by said elastic deformation to the bracket (11).

2. Camera holder (10) according to claim 1, **characterized in that** the light trap (12) comprises a designated camera position (14), wherein the light-absorbing area (13) comprises a flat area (15) which widens with increasing distance from the designated camera position (14), and wherein the light-absorbing area (12) comprises two wall areas (16) which decrease in height with increasing distance from the designated camera position (14).

3. Camera holder (10) according to claim 2, **characterized in that** the light-absorbing area (13) of the light trap (12) being mounted to the bracket (11) is bent along two flex lines (17) at the transition between the flat area (15) of the light-absorbing area (13) and the two wall areas (16) of the light-absorbing area (13).

4. Camera holder (10) according to any one of the preceding claims, **characterized in that** the light-absorbing area (13) of the light trap (13) is bent along a symmetry flex line (18) being mounted to the bracket (11).

5. Camera holder (10) according to any one of the preceding claims, **characterized in that** the edges of the wall areas (16) of the light trap (12) are elastically deflected towards the optical axis (19) of the designated camera position (14) or of a camera (31), in particular in proximity to the designated camera position (14).

6. Camera holder (10) according to any one of the preceding claims, **characterized in that** the light trap (12) comprises at least one slit (20).

7. Camera holder (10) according to any one of the preceding claims, **characterized in that** the bracket (11) and the light trap (12) each comprise mounting points (21) corresponding to each other in shape.

8. Camera holder (10) according to claim 7, **characterized in that** each mounting point (21) retains the light trap (12) at least in an axis (23) perpendicular to an attachment area (22) of the bracket (11).

9. Camera holder (10) according to claim 7 or 8, **characterized in that** the light trap (12) comprises wedged pins (24) and/or wedged sections (25) as mounting points (21) and the bracket (11) comprises corresponding sockets (26) as mounting points (21) .

10. Camera holder (10) according to any one of claims 7 to 9, **characterized in that** the mounting points (21) are arranged at positions symmetrical to an optical axis (19) of the designated camera position (14) and/or a camera (31) .

11. Camera holder (10) according to any one of claims 7 to 10, **characterized in that** the bracket (11) comprises at least one sliding ramp (27) next to at least one mounting point (21) .

12. Camera holder (10) according to any one of the preceding claims, **characterized in that** the light trap (12) has at least one protrusion (28) that is adapted to enable the detachment of the light trap (12) from the bracket (11).

13. Camera holder (10) according to any one of the preceding claims, **characterized in that** the light trap (12) is adapted to have a camera (31) directly attached to the light trap (12).

14. Camera holder (10) according to any one of the preceding claims, **characterized in that** the bracket (11) is adapted to have a camera (31) directly attached to the bracket (11) .

15. Camera system (30) comprising a camera holder according to any one of the preceding claims, **characterized in that** a camera (31) is fastened to the camera holder (10), in particular at the designated camera position (14).
